# EUROPEAN PATENT APPLICATION

(11) **EP 4 660 052 A1**
(43) Date of publication of application: **10.12.2025**
(21) Application number: 23927128.1
(22) Date of filing: 07.11.2023
(51) Int. Cl.: B62D 6/00, B62D 5/00, B60W 50/029, B60W 10/20

(54) **VEHICLE, CONTROL METHOD AND CONTROL APPARATUS THEREOF, AND STORAGE MEDIUM**

(30) Priority: 10.03.2023 CN 202310247828
(71) Applicant: Zhejiang Geely Holding Group Co., Ltd., Hangzhou, Zhejiang 310051 (CN); Ningbo Geely Automobile Research & Development Co. Ltd., Hangzhou Bay New District Ningbo 315336 (CN)
(72) Inventor: TU, Su, Hangzhou, Zhejiang 310051 (CN); SONG, Huaiwen, Hangzhou, Zhejiang 310051 (CN); XU, Hailong, Hangzhou, Zhejiang 310051 (CN); HUANG, Siting, Hangzhou, Zhejiang 310051 (CN); MENG, Fanpo, Hangzhou, Zhejiang 310051 (CN); YANG, Pengfei, Hangzhou, Zhejiang 310051 (CN); FAN, Hongchao, Hangzhou, Zhejiang 310051 (CN); XU, Ting, Hangzhou, Zhejiang 310051 (CN); MA, Zuguo, Hangzhou, Zhejiang 310051 (CN); YU, Jiang, Hangzhou, Zhejiang 310051 (CN); LIANG, Jianping, Hangzhou, Zhejiang 310051 (CN); SI, Kaizhong, Hangzhou, Zhejiang 310051 (CN); XIA, Jinlong, Hangzhou, Zhejiang 310051 (CN)
(74) Representative: Range, Christopher William
(86) International application number: PCT/CN2023/130270
(87) International publication number: WO 2024/187787

(57) **Abstract**

The present disclosure provides a vehicle and a control method, a control apparatus, and a storage medium thereof. The method includes: obtaining a wheel speed difference at a current vehicle speed when it is determined that a steer-by-wire system of the vehicle is failed; obtaining a positive kingpin offset value; and determining, based on the wheel speed difference and the positive kingpin offset value, a target steering angle of a vehicle wheel, and controlling the vehicle wheel based on the target steering angle. The method provided in the present disclosure can enables steering control of the vehicle based on the wheel speed difference and a positive kingpin offset when the steer-by-wire system fails, and no additional components are required. In this way, an off-system backup for the failed steer-by-wire system is achieved, improving vehicle safety and reducing costs.

## Description

### CROSS-REFERENCE TO RELATED APPLICATION

The present disclosure claims priority to Chinese patent application No. 202310247828.6, titled "VEHICLE AND CONTROL METHOD, CONTROL APPARATUS, AND STORAGE MEDIUM THEREOF" on March 10, 2023, the entire contents of which are incorporated herein by reference.

### FIELD

The present disclosure relates to the field of vehicle technologies, and more particularly, to a control method of a vehicle, a control apparatus of a vehicle, a computer-readable storage medium, and a vehicle.

### BACKGROUND

To meet development needs of intelligent driving, a vehicle steering system adopts full-by-wire control technology to replace a traditional steering system. Eliminating mechanical connections between steering system components not only reduces spatial constraints on mechanical layouts of the steering system, providing a good foundation for an intelligent driving cockpit design, but also expands possibilities for coordination between the steering system and other chassis systems. While a steer-by-wire technology brings many advantages, it also comes with inherent risks: in the event of electronic or electrical system failure, the absence of mechanical steering connection would leave drivers unable to control vehicle steering. This issue not only severely hinders the development of the steer-by-wire technology, but also remains a critical pain point in the issuance of regulations.

In the related art, a common solution for a vehicle equipped with the steer-by-wire technology is to add an electronic clutch apparatus to provide mechanical steering capability when software failures occur, ensuring the vehicle steerability. However, adding this electronic clutch fundamentally transforms the system into a modified version of the traditional steering system, which has no advantages over the traditional steering system in terms of structural complexity, spatial layout, and cost control.

### SUMMARY

The present disclosure aims to solve at least one of the technical problems in the related art. To this end, a first objective of the present disclosure is to provide a control method of a vehicle that enables steering control of a vehicle based on a wheel speed difference and a positive kingpin offset when the steer-by-wire system fails, and no additional components are required. In this way, an off-system backup for the failed steer-by-wire system is achieved, thereby improving vehicle safety and reducing costs.

A second objective of the present disclosure is to provide a control apparatus of a vehicle.

A third objective of the present disclosure is to provide a computer-readable storage medium.

A fourth objective of the present disclosure is to provide a vehicle.

To achieve the above-described objective, an embodiment of a first aspect of the present disclosure provides a control method of a vehicle. The method includes: obtaining a wheel speed difference at a current vehicle speed when it is determined that a steer-by-wire system of the vehicle is failed; obtaining a positive kingpin offset value; and determining, based on the wheel speed difference and the positive kingpin offset value, a target steering angle of a vehicle wheel, and controlling the vehicle wheel based on the target steering angle.

With the control method of the vehicle according to the embodiment of the present disclosure, the wheel speed difference at the current vehicle speed is obtained when it is determined that the steer-by-wire system of the vehicle is failed. The positive kingpin offset value is obtained. Based on the wheel speed difference and the positive kingpin offset value, the target steering angle of the vehicle wheel is determined, and the vehicle wheel is controlled based on the target steering angle. Thus, steering control of the vehicle based on the wheel speed difference and the positive kingpin offset when the steer-by-wire system fails, and no additional components. In this way, the off-system backup for the failed steer-by-wire system is achieved, thereby improving the vehicle safety and reducing the costs.

In addition, the control method of the vehicle according to the above-described embodiment of the present disclosure may also have the following additional technical features.

According to an embodiment of the present disclosure, said obtaining the wheel speed difference at the current vehicle speed includes: obtaining a current vehicle speed of the vehicle, a steering wheel angle, and a turning direction of a steering wheel; determining a required steering angle of the vehicle wheel based on the steering wheel angle and a steering ratio of the steer-by-wire system; and determining the wheel speed difference based on the current vehicle speed, the required steering angle, and the turning direction.

According to an embodiment of the present disclosure, said determining, based on the wheel speed difference and the positive kingpin offset value, the target steering angle of the vehicle wheel includes: determining a steering angle of the vehicle wheel based on the wheel speed difference, and determining a compensation steering angle of the vehicle wheel based on the wheel speed difference and the positive kingpin offset value; and determining the target steering angle based on the steering angle and the compensation steering angle of the vehicle wheel.

According to an embodiment of the present disclosure, said determining the compensation steering angle of the vehicle wheel based on the wheel speed difference and the positive kingpin offset value includes: looking up a correspondence between the wheel speed difference and the positive kingpin offset value, and the compensation steering angle; and determining the compensation steering angle of the vehicle wheel based on the correspondence.

According to an embodiment of the present disclosure, the above-described control method of the vehicle further includes: obtaining a steering wheel angle when it is determined that the steer-by-wire system of the vehicle is functional; and determining the target steering angle of the vehicle wheel based on the steering wheel angle.

According to an embodiment of the present disclosure, the above-described control method of the vehicle further includes: obtaining an actual steering angle of the vehicle wheel; determining a corrected steering angle of the vehicle wheel based on the actual steering angle and the target steering angle; and performing corrective control on the vehicle wheel based on the corrected steering angle.

According to an embodiment of the present disclosure, the above-described steer-by-wire system includes a steering feel simulation unit and a steering actuator. Said determining that the steer-by-wire system of the vehicle is failed includes: determining that the steer-by-wire system of the vehicle is failed when detecting that the steering actuator has not received a steering angle output signal from the steering feel simulation unit.

To achieve the above-described objectives, an embodiment of a second aspect of the present disclosure provides a control apparatus of a vehicle. The apparatus includes: a first obtaining module configured to obtain a wheel speed difference at a current vehicle speed when it is determined that a steer-by-wire system of the vehicle is failed; a second obtaining module configured to obtain a positive kingpin offset value; a determining module configured to determine, based on the wheel speed difference and the positive kingpin offset value, a target steering angle of a vehicle wheel; and a control module configured to control the vehicle wheel based on the target steering angle.

With the control apparatus of the vehicle according to the embodiment of the present disclosure, the first obtaining module is configured to obtain the wheel speed difference at the current vehicle speed when it is determined that the steer-by-wire system of the vehicle is failed. The second obtaining module is configured to obtain the positive kingpin offset value. The determining module is configured to determine, based on the wheel speed difference and the positive kingpin offset value, the target steering angle of the vehicle wheel. The control module is configured to control the vehicle wheel based on the target steering angle. Thus, the apparatus can achieve the steering control of the vehicle based on the wheel speed difference and the positive kingpin offset when the steer-by-wire system fails, and no additional components are required. In this way, the off-system backup for the failed steer-by-wire system, thereby improving the vehicle safety and reducing the costs.

To achieve the above-described objectives, an embodiment of a third aspect of the present disclosure provides a computer-readable storage medium having a control program of a vehicle stored thereon. The control program of the vehicle, when executed by a processor, implements the above-described control method of the vehicle.

With the computer-readable storage medium according to the embodiment of the present disclosure, by executing the above-described control method of the vehicle, the steering control of the vehicle can be achieved based on the wheel speed difference and the positive kingpin offset when the steer-by-wire system fails, and no additional components. In this way, the off-system backup for the failed steer-by-wire system is achieved, thereby improving the vehicle safety and reducing the costs.

To achieve the above-described objectives, an embodiment of a fourth aspect of the present disclosure provides a vehicle. The vehicle includes a memory, a processor, and a control program of the vehicle stored in the memory and executable by the processor. The control program of the vehicle, when executed by the processor, implements the above-described control method of the vehicle.

According to the vehicle of the present disclosure, by executing the above-described control method of the vehicle, the steering control of the vehicle can be achieved based on the wheel speed difference and the positive kingpin offset when the steer-by-wire system fails, and no additional components are required. In this way, the off-system backup for the failed steer-by-wire system is achieved, thereby improving the vehicle safety and reducing the costs.

Additional aspects and advantages of the present disclosure will be provided in the following description, or will become apparent at least in part from the following description, or may be learned from practicing of the present disclosure.

### BRIEF DESCRIPTION OF THE DRAWINGS

FIG. 1 is a flowchart of a control method of a vehicle according to an embodiment of the present disclosure.
FIG. 2 is a block diagram of a control apparatus of a vehicle according to an embodiment of the present disclosure.
FIG. 3 is a block diagram of a vehicle according to an embodiment of the present disclosure.

### DETAILED DESCRIPTION OF THE EMBODIMENTS

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

A control method of a vehicle, a control apparatus of a vehicle, a computer-readable storage medium, and a vehicle provided in the embodiments of the present disclosure will be described below with reference to the accompanying drawings.

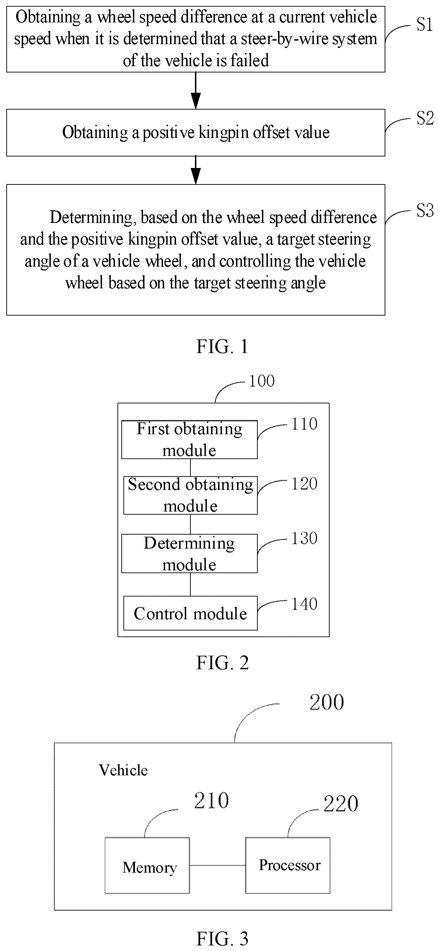

FIG. 1 is a flowchart of the control method of the vehicle according to an embodiment of the present disclosure

As illustrated in FIG. 1, the control method of the vehicle of the embodiments of the present disclosure may include the following operations.

At block S1, a wheel speed difference at a current vehicle speed is obtained when it is determined that a steer-by-wire system of the vehicle is failed.

According to an embodiment of the present disclosure, the above-described steer-by-wire system includes a steering feel simulation unit and a steering actuator. Determining that the steer-by-wire system of the vehicle is failed includes: determining that the steer-by-wire system of the vehicle is failed when detecting that the steering actuator has not received a steering angle output signal from the steering feel simulation unit.

Specifically, when the steer-by-wire system operates functionally, the steering feel simulation unit converts a steering intention of a driver into a steering angle output signal by measuring a steering angle and a torque of a steering wheel, and transmits the steering angle output signal to the steering actuator. Upon receiving the steering angle output signal, the steering actuator controls rotation of the steering wheel by controlling a steering motor to achieve steering. A chassis domain controller performs real-time detection on the steering feel simulation unit and the steering actuator. When detecting that the steering actuator has not received the steering angle output signal from the steering feel simulation unit, the steer-by-wire system of the vehicle is determined to be failed.

According to an embodiment of the present disclosure, obtaining the wheel speed difference at the current vehicle speed includes: obtaining a current vehicle speed of the vehicle, a steering wheel angle, and a turning direction of a steering wheel; determining a required steering angle of the vehicle wheel based on the steering wheel angle and a steering ratio of the steer-by-wire system; and determining the wheel speed difference based on the current vehicle speed, the required steering angle, and the turning direction.

Specifically, when it is determined that the steer-by-wire system of the vehicle is failed, the current speed of the vehicle can be obtained through a speed sensor on the vehicle, and the steering wheel angle and the turning direction of the steering wheel can be obtained through an angle sensor disposed in the steer-by-wire system. The required steering angle of the vehicle wheel is then obtained by dividing the steering wheel angle by the steering ratio of the steer-by-wire system. Since the vehicle speed, the steering angle, the turning direction, and the wheel speed difference are in one-to-one correspondence, the wheel speed difference can be determined by means such as table lookup table when the current vehicle speed, the required steering angle, and turning direction are determined. For example, when the vehicle steers to left, the wheel speed difference between a right front wheel and a left front wheel of the vehicle can be determined based on the current vehicle speed and the required steering angle.

At block S2, a positive kingpin offset value is obtained.

A kingpin offset refers to a distance from an intersection point of a kingpin (i.e., a steering axis) with a ground to a tire contact patch center. A kingpin offset of the vehicle is usually determined during a vehicle development phase, that is, the positive kingpin offset value of the vehicle is a fixed value. In an embodiment of the present disclosure, the kingpin offset of the vehicle adopts a positive kingpin offset, and the positive kingpin offset value can be stored in a chassis domain controller. When the positive kingpin offset value needs to be obtained, the positive kingpin offset value can be retrieved from the chassis domain controller.

At block S3, based on the wheel speed difference and the positive kingpin offset value, a target steering angle of a vehicle wheel is determined, and the vehicle wheel is controlled based on the target steering angle.

Specifically, subsequent to obtaining the wheel speed difference and the positive kingpin offset value respectively through the above-described block S1 and block S2, a driving system or a braking system of the vehicle can distribute a driving force or a braking force for the left front wheel and the right front wheel based on the wheel speed difference. The existence of the wheel speed difference causes a center of mass of the vehicle to deviate towards the side with a lower wheel speed, resulting in a certain steering angle of the vehicle wheels. Since the vehicle adopts a setting of the positive kingpin offset, the braking force or the driving force for the front wheels can overcome a deflection torque generated by a lateral force on the front wheels, causing them to deflect. A deflection direction is exactly consistent with a deflection direction of the center of mass of the vehicle. Therefore, the positive kingpin offset will provide a compensation steering angle in the same direction as the steering angle of the vehicle angle. The target steering angle of the vehicle wheel is obtained by sum the steering angle of the vehicle wheel and the compensation steering angle, with their sum being the target steering angle of the vehicle wheel. Subsequent to determining the target steering angle of the vehicle wheel, the steering actuator controls the vehicle wheel to turn by the target steering angle, in such a manner that the steering of the vehicle is realized.

It should be noted that the kingpin offset of current vehicles is usually negative. With a negative kingpin offset, a braking force application point is at an inside of the kingpin, and a difference between a left braking force and a right braking force will cause the front wheels to deflect to right around the kingpin, offsetting braking deviation and improving braking stability. However, due to a setting of the negative kingpin offset, under a combined torque of a lateral force and the braking force or the driving force for the front wheels, the vehicle wheel will have a movement trend opposite to the center of mass of the vehicle, inhibiting a desired steering trend of the vehicle, that is, inhibiting a steering trend of the wheel speed difference to a certain extent. In the embodiments of the present disclosure, the vehicle adopts a positive kingpin offset, which enables wheel speed difference distribution to achieve a greater degree of lateral movement of the vehicle. This allows the vehicle to pull over to a side of a road and stop safely, and even limp home after a complete failure of the steer-by-wire system.

According to an embodiment of the present disclosure, determining, based on the wheel speed difference and the positive kingpin offset value, the target steering angle of the vehicle wheel includes: determining a steering angle of the vehicle wheel based on the wheel speed difference, and determining a compensation steering angle of the vehicle wheel based on the wheel speed difference and the positive kingpin offset value; and determining the target steering angle based on the steering angle and the compensation steering angle of the vehicle wheel.

Specifically, subsequent to obtaining the wheel speed difference and the positive kingpin offset value, the driving system or the braking system of the vehicle can distribute the driving force or the braking force for the left front wheel and the right front wheel based on the wheel speed difference, which causes the center of mass of the vehicle tends to deviate. At this time, the vehicle wheel has a certain steering angle, which allows the determination of the steering angle of the vehicle wheel. Then, by looking up a table based on the wheel speed difference and the positive kingpin offset value, the compensation steering angle of the vehicle wheel corresponding to the current wheel speed difference and the positive kingpin offset value can be determined. The target steering angle of the vehicle wheel is obtained by sum the steering angle of the vehicle wheel and the compensation steering angle are summed, with their sum being the target steering angle of the vehicle wheel.

Further, according to an embodiment of the present disclosure, determining the compensation steering angle of the vehicle wheel based on the wheel speed difference and the positive kingpin offset value includes: looking up a correspondence between the wheel speed difference and the positive kingpin offset value, and the compensation steering angle; and determining the compensation steering angle of the vehicle wheel based on the correspondence.

Specifically, under a condition that the wheel speed difference and the positive kingpin offset value are fixed values, the compensation steering angle is also a fixed value. During a development and design phase of a vehicle, tests can be conducted on the correspondence between the wheel speed difference and the positive kingpin offset value, and the compensation steering angle, the correspondence can be compiled into a corresponding table and stored in the chassis domain controller of the vehicle. Subsequent to obtaining the wheel speed difference and the positive kingpin offset value, the compensation steering angle of the vehicle wheel can be determined by looking up the table based on the wheel speed difference and the positive kingpin offset value.

According to an embodiment of the present disclosure, the above-described control method of the vehicle further includes: obtaining a steering wheel angle when it is determined that the steer-by-wire system of the vehicle is functional; and determining the target steering angle of the vehicle wheel based on the steering wheel angle.

Specifically, when the chassis domain controller detects that the steering actuator can receive the steering angle output signal of the steering feel simulation unit, the steer-by-wire system of the vehicle is determined to be functional. During braking steering of the vehicle, the angle sensor of the steering wheel can obtain the steering wheel angle. The steering wheel angle is divided by the steering ratio of the steering wheel angle and the steering system to obtain the target steering angle of the vehicle wheel. When the vehicle is driving in a straight line, the steering wheel angle is zero, and the target steering angle of the vehicle wheel is also zero.

According to an embodiment of the present disclosure, the above-described control method of the vehicle further includes: obtaining an actual steering angle of the vehicle wheel; determining a corrected steering angle of the vehicle wheel based on the actual steering angle and the target steering angle; and performing corrective control on the vehicle wheel based on the corrected steering angle.

Specifically, the vehicle is driving in the straight line on a road surface with a large difference in friction coefficients on both sides, that is, a road surface friction coefficient on one side of the vehicle is large (such as a dry asphalt road surface), and the road surface friction coefficient on the other side of the vehicle is small (such as a road surface with water or ice). When the vehicle brakes, a difference in road adhesion coefficients causes a difference in braking force between left-side wheels and right-side wheels of the vehicle. Therefore, a wheel speed difference exists between the left-side wheels and right-side wheels. The existence of the wheel speed difference causes the center of mass of the vehicle to deviate towards a side with a lower wheel speed. Since the vehicle adopts the setting of the positive kingpin offset, the front wheels will deflect under an action of the braking force, and the deflection direction is exactly consistent with the deflection direction of the center of mass of the vehicle, aggravating deviation of the vehicle. Due to closed-loop angle control of the steering actuator of the steer-by-wire system, the deviation of the vehicle caused by the positive kingpin offset can be compensated through a stably controlled steering angle request.

In an exemplary embodiment of the present disclosure, when the vehicle is braking while driving in the straight line on the road surface with the large difference in friction coefficients on both sides, the front wheels will deflect under the action of the braking force, and the chassis domain controller can obtain the actual steering angle of the vehicle wheel. Since the positive kingpin offset aggravates the deviation of the vehicle, the actual steering angle of the vehicle wheel is greater than the target steering angle (zero). A difference is obtained by subtracting the target steering angle from the actual steering angle is the corrected steering angle of the vehicle wheel. The chassis domain controller performs the corrective control on the vehicle wheel based on the corrected steering angle to prevent the vehicle from being deviated. Thus, by performing the closed-loop angle control of the steer-by-wire, compensation for the steering angle request is performed, which can completely eliminate the deviation of the vehicle, ensuring stability of vehicle driving.

It should be understood that, for a vehicle equipped with a steer-by-wire system, the steering actuator of the steer-by-wire system automatically adjusts rotation of the vehicle wheel by superimposing the steering angle request of a host computer (chassis domain controller) to avoid the deviation, and the driver does not feel the rotation of the steering wheel at this time. Therefore, the steer-by-wire system can adjust the required steering angle of the vehicle wheel more quickly and accurately than the driver, completely eliminating side slip of the vehicle.

To conclude, with the control method of the vehicle according to the embodiments of the present disclosure, the wheel speed difference at the current vehicle speed is obtained when it is determined that the steer-by-wire system of the vehicle is failed. The positive kingpin offset value is obtained. Based on the wheel speed difference and the positive kingpin offset value, the target steering angle of the vehicle wheel is determined, and the vehicle wheel is controlled based on the target steering angle. Thus, steering control of the vehicle can be achieved based on the wheel speed difference and the positive kingpin offset when the steer-by-wire system fails, and no additional components are required. In this way, the off-system backup for the failed steer-by-wire system is achieved, improving vehicle safety and reducing costs.

Corresponding to the above-described embodiments, the present disclosure further provides a control apparatus of a vehicle.

FIG. 2 is a block diagram of the control apparatus of the vehicle according to an embodiment of the present disclosure.

As illustrated in FIG. 2, a control apparatus of a vehicle 100 of the embodiments of the present disclosure may include: a first obtaining module 110, a second obtaining module 120, a determining module 130, and a control module 140.

The first obtaining module 110 is configured to obtain a wheel speed difference at a current vehicle speed when it is determined that a steer-by-wire system of the vehicle is failed. The second obtaining module 120 is configured to obtain a positive kingpin offset value. The determining module 130 is configured to determine, based on the wheel speed difference and the positive kingpin offset value, a target steering angle of a vehicle wheel. The control module 140 is configured to control the vehicle wheel based on the target steering angle.

According to an embodiment of the present disclosure, the first obtaining module 110 obtains the wheel speed difference at the current vehicle speed, and is specifically configured to: obtain a current vehicle speed of the vehicle, a steering wheel angle, and a turning direction of a steering wheel; determine a required steering angle of the vehicle wheel based on the steering wheel angle and a steering ratio of the steer-by-wire system; and determine the wheel speed difference based on the current vehicle speed, the required steering angle, and the turning direction.

According to an embodiment of the present disclosure, the determining module 130 determines, based on the wheel speed difference and the positive kingpin offset value, the target steering angle of the vehicle wheel, and is specifically configured to: determine a steering angle of the vehicle wheel based on the wheel speed difference, and determine a compensation steering angle of the vehicle wheel based on the wheel speed difference and the positive kingpin offset value; and determine the target steering angle based on the steering angle and the compensation steering angle of the vehicle wheel.

According to an embodiment of the present disclosure, the determining module 130 determines the compensation steering angle of the vehicle wheel based on the wheel speed difference and the positive kingpin offset value, and is specifically configured to: look up a correspondence between the wheel speed difference and the positive kingpin offset value, and the compensation steering angle; and determine the compensation steering angle of the vehicle wheel based on the correspondence.

According to an embodiment of the present disclosure, the control apparatus of the vehicle 100 is further configured to obtain a steering wheel angle when it is determined that the steer-by-wire system of the vehicle is functional; and determine the target steering angle of the vehicle wheel based on the steering wheel angle.

According to an embodiment of the present disclosure, the control apparatus of the vehicle 100 is further configured to: obtain an actual steering angle of the vehicle wheel; determine a corrected steering angle of the vehicle wheel based on the actual steering angle and the target steering angle; and perform corrective control on the vehicle wheel based on the corrected steering angle.

According to an embodiment of the present disclosure, the above-described steer-by-wire system includes the steering feel simulation unit and the steering actuator. The first obtaining module 110 determines that the steer-by-wire system of the vehicle is failed, and is specifically configured to determine that the steer-by-wire system of the vehicle is failed when detecting that the steering actuator has not received a steering angle output signal from the steering feel simulation unit.

It should be noted that, for details not disclosed in the control apparatus of the vehicle in the embodiments of the present disclosure, please refer to the details disclosed in the control method of the vehicle in the embodiments of the present disclosure, and specific details will not be repeated here.

With the control apparatus of the vehicle according to the embodiments of the present disclosure, the first obtaining module obtains the wheel speed difference at the current vehicle speed when it is determined that the steer-by-wire system of the vehicle is failed. The second obtaining module obtains the positive kingpin offset value. The determining module determines, based on the wheel speed difference and the positive kingpin offset value, the target steering angle of the vehicle wheel. The control module controls the vehicle wheel based on the target steering angle. Thus, the apparatus can achieve the steering control of the vehicle based on the wheel speed difference and the positive kingpin offset when the steer-by-wire system fails, and no additional components are required. In this way, the off-system backup for the failed steer-by-wire is achieved, improving the vehicle safety and reducing the costs.

Corresponding to the above-described embodiments, the present disclosure further provides a computer-readable storage medium.

The computer-readable storage medium of the embodiments of the present disclosure has a control program of the vehicle stored thereon. The control program of the vehicle, when executed by a processor, implements the above-described control method of the vehicle.

With the computer-readable storage medium according to the embodiments of the present disclosure, by executing the above-described control method of the vehicle, the steering control of the vehicle can be achieved based on the wheel speed difference and the positive kingpin offset when the steer-by-wire system fails, and no additional components are required. In this way, the off-system backup for the failed steer-by-wire system is achieved, improving the vehicle safety and reducing the costs.

Corresponding to the above-described embodiments, the present disclosure further provides a vehicle.

FIG. 3 is a block diagram of the vehicle according to an embodiment of the present disclosure.

As illustrated in FIG. 3, a vehicle 200 of the embodiments of the present disclosure includes a memory 210, a processor 220, and a control program of the vehicle stored in the memory 210 and executable by the processor 220. The control program of the vehicle, when executed by the processor 220, implements the above-described control method of the vehicle.

With the vehicle according to the embodiments of the present disclosure, by executing the above-described control method of the vehicle, the steering control of the vehicle can be achieved based on the wheel speed difference and the positive kingpin offset when the steer-by-wire system fails, and no additional components are required. In this way, the off-system backup for the failed steer-by-wire system is achieved, improving the vehicle safety and reducing the costs.

It should be noted that, the logic and/or step described in other manners herein or shown in the flow chart, for example, a particular sequence table of executable instructions for realizing the logical function, may be specifically achieved in any computer-readable medium to be used by the instruction execution system, apparatus or device (such as the system based on computers, the system comprising processors or other systems capable of obtaining the instruction from the instruction execution system, apparatus and device and executing the instruction), or to be used in combination with the instruction execution system, apparatus and device. As to the specification, "the computer-readable medium" may be any apparatus adaptive for including, storing, communicating, propagating or transferring programs to be used by or in combination with the instruction execution system, apparatus or device. More specific examples of the computer-readable medium comprise but are not limited to: an electronic connection (an electronic apparatus) with one or more wires, a portable computer enclosure (a magnetic apparatus), a random access memory (RAM), a read only memory (ROM), an erasable programmable read-only memory (EPROM or a flash memory), an optical fiber apparatus and a portable compact disk read-only memory (CDROM). In addition, the computer-readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. The appearances of the above phrases in various places throughout this specification are not necessarily referring to the same embodiment or example of the present disclosure. Furthermore, the particular features, structures, materials, or characteristics may be combined in any suitable manner in one or more embodiments or examples.

In addition, terms such as "first" and "second" are used herein for purposes of description and are not intended to indicate or imply relative importance, or to implicitly show the number of technical features indicated. Thus, the feature defined with "first" and "second" may explicitly or implicitly comprise one or more this feature. In the description of the present disclosure, "a plurality of" means two or more, unless specified otherwise.

In the description of the present disclosure, it should be noted that, unless otherwise clearly specified and limited, terms such as "install", "connect", "connect to", and the like should be understood in a broad sense. For example, it may be a fixed connection or a detachable connection or connection as one piece; mechanical connection or electrical connection; direct connection or indirect connection through an intermediate; internal communication of two components or the interaction relationship between two components. For those of ordinary skill in the art, the specific meaning of the above-described terms in the present disclosure can be understood according to specific circumstances.

Although embodiments of the present disclosure have been shown and described above, it should be understood that above embodiments are merely exemplary, and cannot be construed to limit the present disclosure. For those skilled in the art, various changes, modifications, replacements, and variations can be made to the embodiments without departing from the scope of the present disclosure.

## Claims

1. A control method of a vehicle, comprising:
obtaining a wheel speed difference at a current vehicle speed when it is determined that a steer-by-wire system of the vehicle is failed;
obtaining a positive kingpin offset value; and
determining, based on the wheel speed difference and the positive kingpin offset value, a target steering angle of a vehicle wheel, and controlling the vehicle wheel based on the target steering angle.

2. The control method of the vehicle according to claim 1, wherein said obtaining the wheel speed difference at the current vehicle speed comprises:
obtaining a current vehicle speed of the vehicle, a steering wheel angle, and a turning direction of a steering wheel;
determining a required steering angle of the vehicle wheel based on the steering wheel angle and a steering ratio of the steer-by-wire system; and
determining the wheel speed difference based on the current vehicle speed, the required steering angle, and the turning direction.

3. The control method of the vehicle according to claim 1, wherein said determining, based on the wheel speed difference and the positive kingpin offset value, the target steering angle of the vehicle wheel comprises:
determining a steering angle of the vehicle wheel based on the wheel speed difference, and determining a compensation steering angle of the vehicle wheel based on the wheel speed difference and the positive kingpin offset value; and
determining the target steering angle based on the steering angle and the compensation steering angle of the vehicle wheel.

4. The control method of the vehicle according to claim 3, wherein said determining the compensation steering angle of the vehicle wheel based on the wheel speed difference and the positive kingpin offset value comprises:
looking up a correspondence between the wheel speed difference and the positive kingpin offset value, and the compensation steering angle; and
determining the compensation steering angle of the vehicle wheel based on the correspondence.

5. The control method of the vehicle according to any one of claims 1 to 4, further comprising:
obtaining a steering wheel angle when it is determined that the steer-by-wire system of the vehicle is functional; and
determining the target steering angle of the vehicle wheel based on the steering wheel angle.

6. The control method of the vehicle according to claim 5, further comprising:
obtaining an actual steering angle of the vehicle wheel;
determining a corrected steering angle of the vehicle wheel based on the actual steering angle and the target steering angle; and
performing corrective control on the vehicle wheel based on the corrected steering angle.

7. The control method of the vehicle according to any one of claims 1 to 6, wherein the steer-by-wire system comprises a steering feel simulation unit and a steering actuator, and said determining that the steer-by-wire system of the vehicle is failed comprises:
determining that the steer-by-wire system of the vehicle is failed when detecting that the steering actuator has not received a steering angle output signal from the steering feel simulation unit.

8. A control apparatus of a vehicle, comprising:
a first obtaining module configured to obtain a wheel speed difference at a current vehicle speed when it is determined that a steer-by-wire system of the vehicle is failed;
a second obtaining module configured to obtain a positive kingpin offset value;
a determining module configured to determine, based on the wheel speed difference and the positive kingpin offset value, a target steering angle of a vehicle wheel; and
a control module configured to control the vehicle wheel based on the target steering angle.

9. A computer-readable storage medium having a control program of a vehicle stored thereon, wherein the control program of the vehicle, when executed by a processor, implements the control method of the vehicle according to any one of claims 1 to 7.

10. A vehicle, comprising a memory, a processor, and a control program of the vehicle stored in the memory and executable by the processor, wherein the control program of the vehicle, when executed by the processor, implements the control method of the vehicle according to any one of claims 1 to 7.
